# EUROPEAN PATENT SPECIFICATION

(11) **EP 1 961 134 B1**
(45) Date of publication and mention of the grant of the patent: **07.05.2014**
(21) Application number: 06799053.1
(22) Date of filing: 02.10.2006
(51) Int. Cl.: H04B 7/26, H04W 76/02

(54) **IMPROVEMENTS IN MOBILE TELECOMMUNICATIONS**
VERBESSERUNGEN BEI DER MOBILTELEKOMMUNIKATION
AMELIORATIONS DE TELEPHONES MOBILES

(30) Priority: 05.10.2005 GB 0520280
(43) Date of publication of application: 27.08.2008
(73) Proprietor: Samsung Electronics Co., Ltd., Suwon-si, Gyeonggi-do, 443-742 (KR)
(72) Inventor: MOHAJER, Mojan, Staines TW18 4QE (GB); CHIN, Chen-Ho, Staines TW18 4QE (GB)
(74) Representative: Nederlandsch Octrooibureau
(86) International application number: PCT/KR2006/003970
(87) International publication number: WO 2007/040332

(56) References cited:
- WO-A1-03/041435
- WO-A1-2004/102837
- US-A1- 2005 026 597
- '3rd Generation Partnership Project, Technical Specification Group Core Network and Terminals, Mobile radio interface Layer 3 specification, Core network protocols, Stage 3 (Release 7)' 3GPP TS 24.008 V7.1.0 29 September 2005, XP002369255

## Description

The present invention relates to improvements in mobile telecommunications, and in particular to improvements in methods, devices and networks when requesting service from a network.

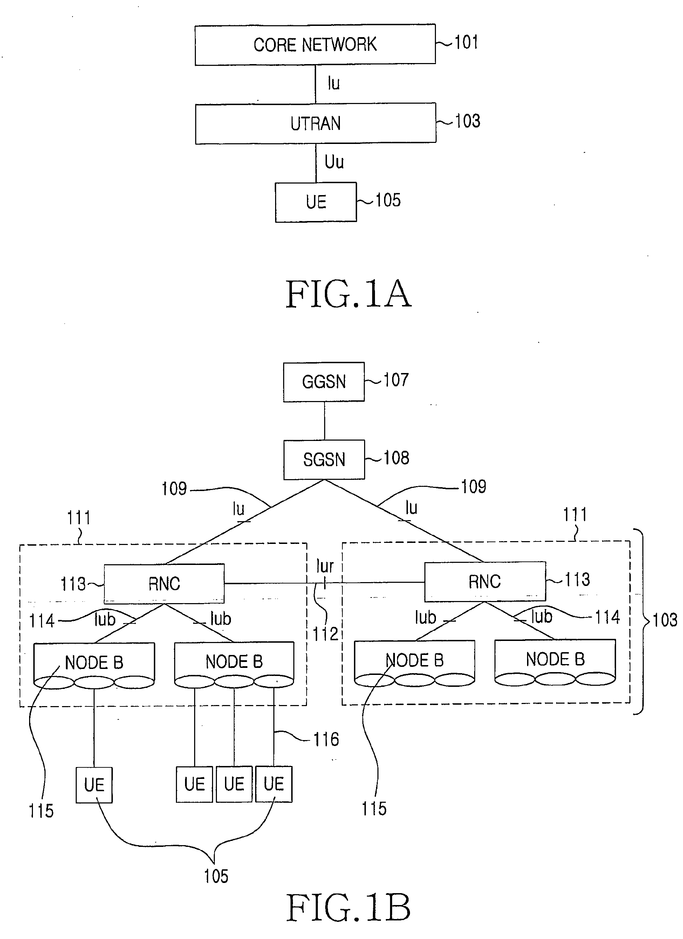

A basic structure of a Universal Mobile Telecommunications System (UMTS) network is shown in Figure 1A. UMTS concerns a 3G (3^{rd} Generation) radio network that uses wideband code division multiple access (W-CDMA) technology. A core network 101 is connected to a UMTS Terrestrial Radio Access Network (UTRAN) 103 via an Iu interface. The UTRAN 103 is connected to User Equipment (UE) 105 via a radio interface Uu. The UEs are mobile communication devices, for example, mobile telephones, personal digital assistants (PDAs), or the like.

A more detailed view of UTRAN architecture is shown in Figure 1B. UTRAN 103 is made up of a number of Radio Network Subsystems (RNS) 111. The RNS is connected to the core network 101 via the Iu interface 109, as described above. The core network includes a Serving GPRS Support Node (SGSN) 108 and a Gateway GPRS Support Node (GGSN) 107.

Within each RNS 111 is a Radio Network Controller (RNC) 113 and a number of base stations 115 used as transmitters. In the case of UTRAN, the base station is called a Node B. Each base station 115 connects to the RNC 113 via an Iub interface 114. Each RNC 113 may be interconnected to one or more other RNCs 113 using an Iur interface 112.

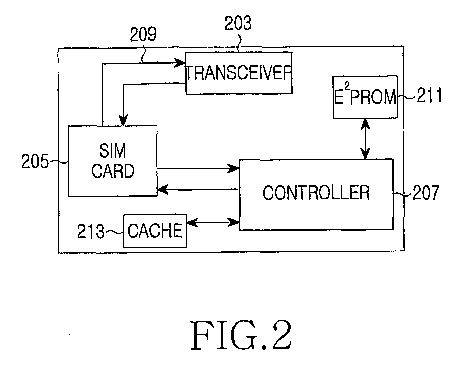

Figure 2 shows some of the internal components of a typical mobile telephone 201. The mobile telephone 201 has a transceiver 203 to receive and transmit messages from/to a Network via an air interface. Incoming messages may be received by a SIM card 205, which is housed within the mobile telephone 201.

The SIM card 205 acts upon instructions received via encrypted messages from the Network and outputs instructions to a controller 207. The SIM card 205 is enabled to do this by programming the SIM card using known systems such as SIM Toolkit and JavaSIM. Connected to the controller is an E²PROM memory device 211, and a cache memory 213. A communications bus 309 links most of the components within the mobile telephone 201.

In order for a mobile telephone to transfer packets of data between itself and the Network, the mobile telephone must first request that the Network assigns the user-plane to the mobile telephone. That is, the mobile telephone requires radio bearers to be established to allow data to be transferred. This request is in the form of a Service Request (Service Type=Data) message.

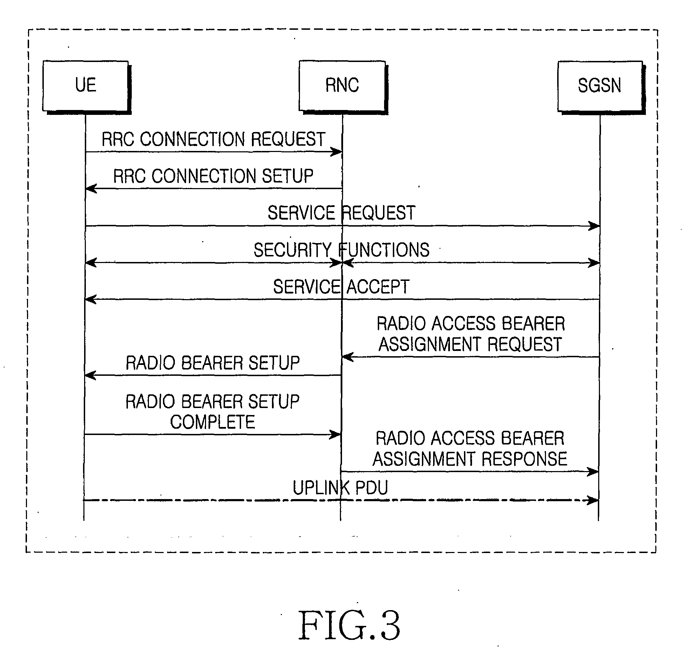

A known successful operation sequence of a request for service is indicated in Figure 3. The mobile telephone requests an RRC (Radio Resource Control) connection with the RNC. The RNC provides the required data to allow the RRC connection to be set up. The mobile telephone transmits a Service Request (Service Type=Data) message to the SGSN. The required security functions are then established between the SGSN, RNC and mobile telephone. The SGSN transmits a Service Accept message to the mobile telephone, followed by a RAB (Radio Access Bearer) assignment request to the RNC. The RNC provides to the mobile telephone the necessary data to allow a radio bearer to be established. The radio bearer set up is then completed, and the RNC sends a RAB assignment response to the SGSN. Packet Data Units (PDU) are then able to be sent by the mobile telephone to the SGSN.

Under some circumstances the Network does not assign the user-plane to the mobile telephone even though the mobile telephone has requested it. The reasons why the Network does not allow the request are unknown to the mobile telephone. Therefore, the mobile telephone can overload the Network with constant repeated requests for the user-plane.

In other circumstances, the Network will return a Service Accept message from the SGSN. However, the Network may wish to delay or stop the assignment of a radio bearer for the data transfer because of a lack of resources. Therefore, the mobile telephone continuously issues a service request.

A solution to this problem has been provided in a change request S2-021894, which is available from the 3rd Generation Partnership Project (3GPP) website at http://www.3gpp.org/. In this solution, it is mandated that the mobile telephone shall not repeat a Service Request (Service Type=Data) if the Network has returned a Service Accept message, even if a radio bearer has not been established unless the mobile telephone has switched from PMM_CONNECTED mode to PMM_IDLE mode since the service request was made. The reasoning behind this is that the Network is in full control of the management and allocation resources, and so is fully aware that the mobile telephone is waiting for a radio bearer to be established and so does not require continuous service requests to be sent.

However, with the implementation of this change to the standard, a further problem now occurs. That is, there is a possibility, particularly in the case of multi-PDP (packet data protocol), that UTRAN can release some or all of the radio access bearers (RAB) or radio bearers (RB) but still maintain the Signalling Radio Bearers (SRB) along with the PMM Connection. This is likely to happen if there are periods of inactivity. In this situation, the mobile telephone will not request service again, even if there is uplink data to be transferred and the PDCP/RABM (Packet Data Convergence Protocol/Radio Access Bearer Management) is aware that a radio bearer has not been assigned.

Therefore, the mobile telephone will stay in PMM_CONNECTED mode without being allocated a user-plane resource. As the mobile telephone is in PMM_CONNECTED mode it will not be able to repeat the Service Request (Service Type=Data). This results in the applications uplink data clogging up the mobile telephone system and causing the mobile telephone system to stop working.

One suggested solution requires the non-access stratum (NAS) to co-relate the RBs/RABs with the active applications and, if the applications want to send data when a radio bearer has not been allocated, a Service Request (Service Type=Data) is sent regardless of the state of the mobile telephone, and regardless of whether the mobile telephone has previously sent a Service Request (Service Type=Data). Information on this suggested solution is available in C1-051000 at http://www.3gpp.org/. This solution over complicates the implementation of the mobile telephone. It also requires linkage between the Protocol machines and control modules of a mobile platform with the Applications at Application level. However, it is usual that these two layers are under different design ownership resulting in a non-commercial, expensive and non-optimal solution.

A second suggested solution available in C1-051183 at http://www.3gpp.org/, provides a hard-coded timer in the mobile telephone with a fixed timer value. The timer is started within the mobile telephone every time a Service Request (Service Type=Data) is sent. The mobile telephone is then not able to make a further Service Request (Service Type=Data) until the timer has expired. This single value timer solution applies to all upper layer applications and network situations. This results in inefficiency, as different applications would have different requirements when it comes to the optimum time they are able to wait before repeating the Service Request (Service Type=Data). Also, different operators have different networks, which by way of implementation have different RRM (Radio Resource Management) functions. So, finding an optimal value for this timer would be extremely difficult considering the large number of different applications that may be run, and the constant changes made to current applications and the development of new applications.

The present invention aims to overcome, or at least alleviate, some or all of the afore-mentioned problems as described in the claims.

The present invention provides the advantage that the network is enabled to dynamically set a timing means based on its knowledge of the active applications, the time value associated with the timing means may be chosen so as to be suitable for specific applications based on a logical and acceptable holding time for the application. Alternatively, the time values may be dynamically set based on the Network's knowledge of its Resource Management algorithms and functions.

Further, each Network can dynamically set its own time values depending on its Resource Management algorithms and functions.

Specific embodiments of the present invention will now be described by way of example only, with reference to the accompanying drawings, in which:
Figure 1A shows a typical architecture of a known cellular network;
Figure 1B shows a more detailed known UTRAN network architecture;
Figure 2 shows the internal components of a mobile telephone device capable of implementing the present invention;
Figure 3 shows a known successful operation sequence of a request for service;
Figure 4 shows a sequence of messages according to an embodiment of the present invention;
Figure 5 shows a further sequence of messages according to an embodiment of the present invention;
Figure 6 shows yet a further sequence of messages according to an embodiment of the present invention;
Figure 7 shows another sequence of messages according to an embodiment of the present invention;

### Preferred Embodiment

A preferred embodiment of the present invention will now be described.

The inventive solution provided by this application is that of adapting a Network so it can provide a holding time value to the mobile telephone. The Network makes a determination of a suitable value for the holding time based upon certain criteria. With this dynamically set time value, the mobile telephone is adapted so as to hold off repeating the Service Request until the holding timing device expires.

WO2004/102837 discloses a communication network wherein RRC connection request messages are sent by a plurality of terminals to the network in response to an RRC connection-required message received from the network on a first channel. If an internal timer expires (S244) before an RRC connection setup message is received, receiving on the first channel (S250) either an RRC connection-required message or an RRC connection-not-required message to determine (S260) whether to enter an idle state (S267)",

WO2004/102837 does not disclose how the internal time is and initiated.

In addition, each separate Network is able to provide its own values for the holding timing device based upon whatever criterion the network resources management might be using.

In this preferred embodiment, the time value is provided to the mobile telephone within the Service Accept message sent by the Network upon accepting the request for service. A new Information Element is provided in an adapted Service Accept message as detailed below.

The time value used in this embodiment is a timer value for use by a timer located on the mobile telephone. The mobile telephone stores the timer value in its cache memory. The timer value can then be used to initiate a timer being run on the mobile telephone. The timer will then count down from the stored time value to zero, unless it is cancelled. It will be understood that other means can be used to determine the length of time that has expired. For example, a counting means may be implemented that can determine the time expired based on the frame numbers received. Therefore, the timing means may either increment a value until it reaches the stored value, or alternatively decrement the stored value until it reaches a desired target value.

The service accept message is sent to the mobile telephone by the Network to inform the mobile telephone that the Network intends to provide the requested service. See table 9.4.21/3GPP TS 24.008.

| | |
|---|---|
| Message type: | Service Accept |
| Significance: | Dual |
| Direction: | Network to mobile telephone |

**Table 9.4.21/3GPP TS 24.008: Contents of Service Accept message content**

| **IEI** | **Information Element** | **Type/Reference** | **Presence** | **Format** | **Length** |
|---|---|---|---|---|---|
| | Protocol discriminator | Protocol discriminator 10.2 | M | V | 1/2 |
| | Skip indicator | Skip indicator 10.3.1 | M | V | 1/2 |
| | Service Accept | Message type 10.4 | M | V | 1 |
| 32 | PDP context status | PDP context status 10.5.7.1 | O | TLV | 4 |
| 35 | MBMS context status | MBMS context status 10.5.7.6 | O | TLV | 2-18 |
| TBD | Twxyz value | Holding Off Timer 10.5.7.x | O | TLV | Any suitable |

Therefore, after the mobile telephone has received the timer value, and stored the value in its cache memory, upon the mobile telephone sending a Service Request message, the holding off timer is enabled using the stored value and starts counting down from that stored value. The mobile telephone is then disabled from sending a further service request until a time when the timer has expired (i.e. in this embodiment, the timer has reached zero) and no radio bearer has been established and that the mobile telephone has still the need for radio bearer.

If the network allocates the required resources, i.e. establishes a radio bearer, while the mobile telephone is being held off during the running of the holding timer, the mobile telephone can immediately proceed to use the then allocated resources. Subsequently, the holding timer is cancelled. The mobile telephone does not then need to repeat the Service Request for User-Plane resources.

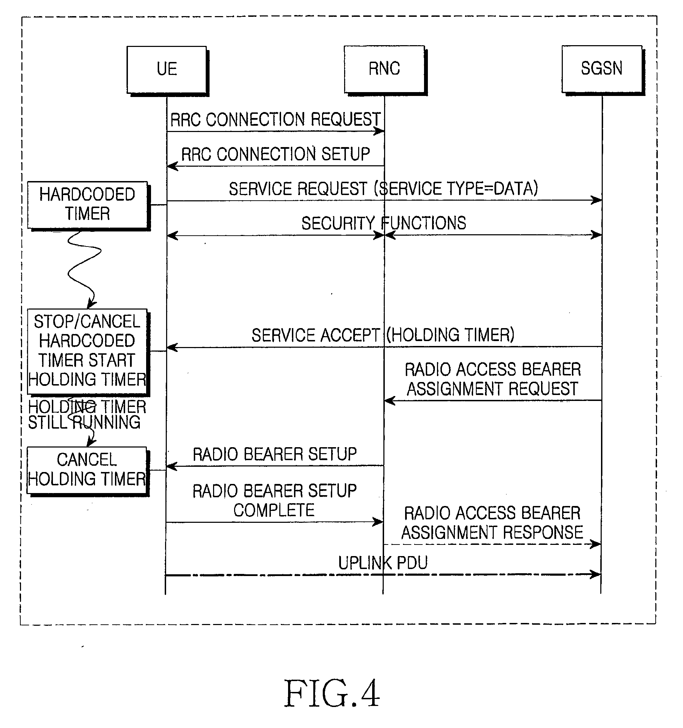

Figures 4, 5, 6 and 7, illustrate this solution in more detail.

Figure 4 shows the procedure and message flow when a mobile telephone is in an initial mode and so does not have stored in its cache memory a timer value that has been dynamically set and sent by the Network to the mobile telephone.

The lack of a network set timer value stored in the cache memory of the mobile telephone may be due to, for example, the mobile telephone switching from one network to another network. That is, because different networks have different Resource Management algorithms and functions, the use of a previous network's determined timer value may not be suitable. Therefore, the mobile telephone erases previous timer values when switching networks. Alternatively, the mobile telephone may not previously have received any network set timer values.

The mobile telephone requests an RRC (Radio Resource Control) connection with the RNC. The RNC provides the required data to allow the RRC connection to be set up. The mobile telephone transmits a Service Request (Service Type=Data) message to the SGSN.

After sending the request, the mobile telephone initialises a timer with a default timer value. The default timer value is hard coded in the software of the mobile telephone.

The required security functions are then established between the SGSN, RNC and mobile telephone. The SGSN transmits a Service Accept message to the mobile telephone. The Service Accept message includes a holding timer value, which is subsequently stored within the cache memory of the mobile telephone. The mobile telephone cancels the timer that is running using the default timer value, and subsequently initiates a timer using the stored holding timer value.

The SGSN transmits a RAB (Radio Access Bearer) assignment request to the RNC. The RNC provides to the mobile telephone the necessary data to allow a radio bearer to be established. The radio bearer is thus established. The mobile telephone cancels the holding timer.

The RNC sends a RAB assignment response to the SGSN. Packet Data Units (PDU) are then able to be sent by the mobile telephone to the SGSN.

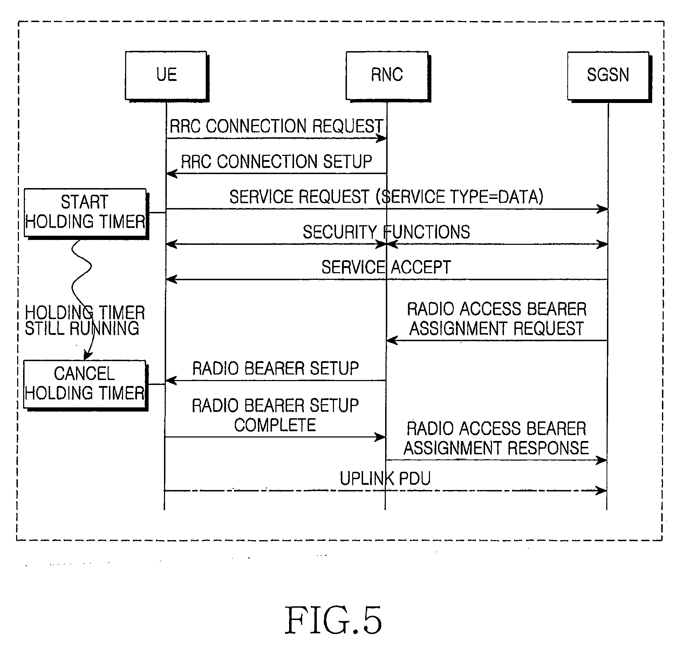

Figure 5 shows the procedure and message flow when the Network accepts a Service Request and subsequently establishes a radio bearer prior to the holding timer expiring. The mobile telephone has previously received a timer value from the Network.

The mobile telephone requests an RRC (Radio Resource Control) connection with the RNC. The RNC provides the required data to allow the RRC connection to be set up. The mobile telephone transmits a Service Request (Service Type=Data) message to the SGSN.

After sending the request, the mobile telephone initialises a timer using the holding timer value stored in its cache memory that was previously received from the Network.

The required security functions are then established between the SGSN, RNC and mobile telephone. The SGSN transmits a Service Accept message to the mobile telephone. In this example, the Service Accept message includes a holding timer value that is the same as the holding timer value stored in the mobile telephone's cache memory. The mobile telephone compares the received timer value with the stored timer value, and, because they are the same, allows the holding timer to continue running. For this Figure5, it could be just as well that the Service Accept does not include a holding timer. The mobile telephone will continue to use the stored timer value, if the criterion for use of the stored time value (as described else where in this document) are met.

The SGSN transmits a RAB (Radio Access Bearer) assignment request to the RNC. The RNC provides to the mobile telephone the necessary data to allow a radio bearer to be established. The radio bearer is thus established. The mobile telephone cancels the holding timer.

The RNC sends a RAB assignment response to the SGSN. Packet Data Units (PDU) are then able to be sent by the mobile telephone to the SGSN.

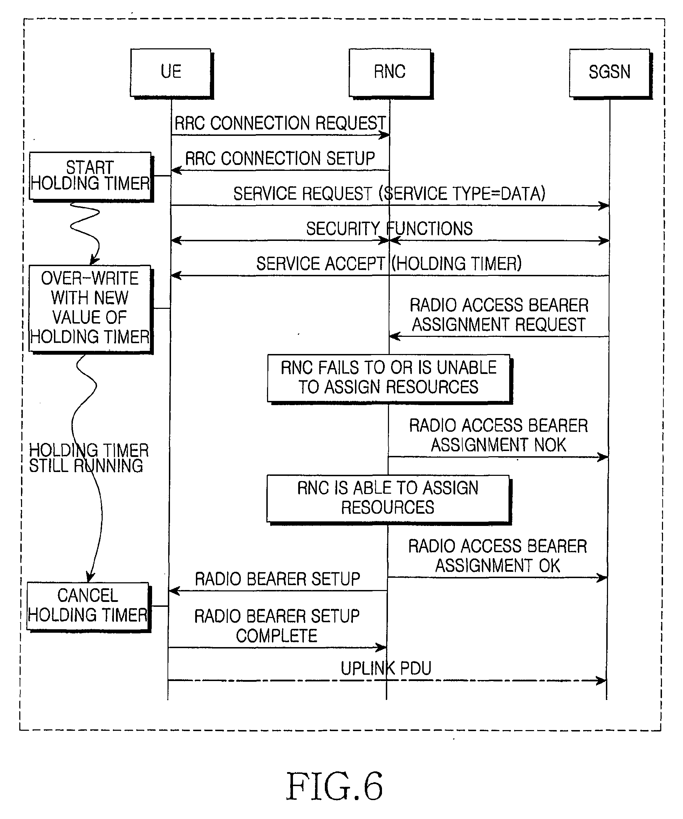

Figure 6 shows the procedure and message flow when the Network initially accepts a Service Request but does not immediately establish a radio bearer. The Network subsequently establishes a radio bearer prior to the holding timer expiring. Also, in this example the timer value received from the Network is different to that currently stored in the cache memory of the mobile telephone.

The mobile telephone requests an RRC (Radio Resource Control) connection with the RNC. The RNC provides the required data to allow the RRC connection to be set up. The mobile telephone transmits a Service Request (Service Type=Data) message to the SGSN.

After sending the request, the mobile telephone initialises a timer using the holding timer value stored in its cache memory that was previously received from the Network.

The required security functions are then established between the SGSN, RNC and mobile telephone. The SGSN transmits a Service Accept message to the mobile telephone.

In this example, the Service Accept message includes a holding timer value that is different to the holding timer value stored in the mobile telephone's cache memory. The mobile telephone overwrites the previously stored holding timer value with this new value. The mobile telephone then initialises the holding timer using the new stored timer value.

It will be understood that it is not necessary to overwrite the previous stored value as long as the timer is aware of which holding timer value is to be used.

The SGSN transmits a RAB (Radio Access Bearer) assignment request to the RNC. The RNC fails, or is unable, to assign the necessary resources, and informs the SGSN. Subsequently, the RNC is able to provide the necessary resources and sends a message to the SGSN informing it. The RNC then provides to the mobile telephone the necessary data to allow a radio bearer to be established. The radio bearer is thus established. The mobile telephone cancels the holding timer.

Packet Data Units (PDU) are then able to be sent by the mobile telephone to the SGSN.

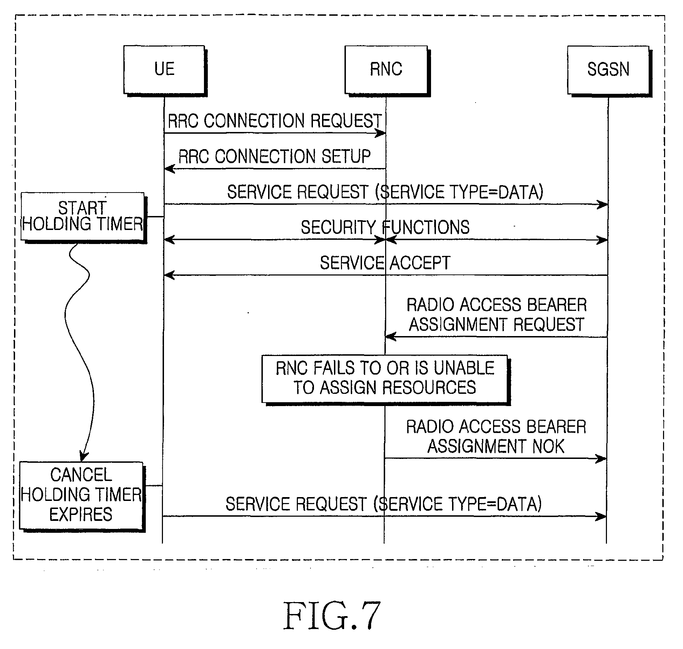

Figure 7 shows the procedure and message flow when the Network initially accepts a Service Request but is unable to establish a radio bearer before the holding timer expires.

The mobile telephone requests an RRC (Radio Resource Control) connection with the RNC. The RNC provides the required data to allow the RRC connection to be set up. The mobile telephone transmits a Service Request (Service Type=Data) message to the SGSN.

After sending the request, the mobile telephone initialises a timer using the holding timer value stored in its cache memory that was previously received from the Network.

The required security functions are then established between the SGSN, RNC and mobile telephone. The SGSN transmits a Service Accept message to the mobile telephone. In this example, the Service Accept message includes a holding timer value that is the same as the holding timer value stored in the mobile telephone's cache memory. The mobile telephone compares the received timer value with the stored timer value, and, because they are the same, allows the holding timer to continue running.

The SGSN transmits a RAB (Radio Access Bearer) assignment request to the RNC. The RNC fails, or is unable, to assign the necessary resources, and informs the SGSN. Upon the holding timer expiring, the mobile telephone is able to transmit a further Service Request (Service Type=Data) message to the SGSN.

Thus, the Network can provide to the mobile telephone, in any appropriate signalling message, a timer value that can be used by the mobile telephone to limit the time in which it can repeat a Service Request.

The network is best placed to dynamically determine a suitable holding timer value for the applications running on the mobile telephone. This is because the network is aware of the active applications on the mobile telephone and is aware of a logical and acceptable holding time for those applications. Also the Network can choose a suitable timer value based on its own Radio Resource Management algorithms and functions and any other Network dependent parameters.

The dynamic provision of the holding timer is not intended to stop or delay the mobile telephone from utilising any user-plane resources assigned by the Network before the expiry of the holding timer.

The cancellation of the holding timer will allow the mobile telephone to repeat the Service Request should the user plane resources be subsequently removed by the Network and the mobile telephone still requires the removed resources.

### Further Embodiments

It will be understood that embodiments of the present invention are described herein by way of example only, and that various changes and modifications may be made without departing from the scope of the invention.

It will be understood that, although the preferred embodiment uses a Service Accept message as the signalling message to deliver the holding timer value, the holding timer value can be delivered in any appropriate signalling message. For example, the holding timer value may be inserted in a modified version of any known suitable message as an additional Information Element within that message. Further, the holding timer value may be provided within an Information Element within any suitable message, whether that message is currently used or not. For example, the holding timer value may be provided in any of the following messages ATTACH_ACCEPT, ROUTING_AREA_UPDATE_ACCEPT. It is also possible for the mobile telephone to request the holding timer value in a message, such as, for example, in the ATTACH_REQUEST or ROUTING_AREA_UPDATE_REQUEST messages.

Further, it will be understood that the present invention can be used in conjunction with a mobile telephone including a hard coded timer as described above. This further solution can work in conjunction by supplementing any hard coded timer, such that the holding timer provided by the Network overrides the hard coded timer.

Further, it will be understood that, for multiple Networks, each Network can set a different value depending on its Resource Management algorithms and functions and any other Network dependent parameters.

Further, it will be understood that the mobile telephone may not be required to wait until the timer reaches zero prior to it being enabled to resend a further service request. That is, the mobile telephone could send the repeated service request at a predetermined time prior to the expiry of the holding timer. For example, the mobile telephone could have a preset value of 2 seconds, whereby, upon the timer reaching a value of 2 seconds (i.e. 2 seconds before the timer expires), the mobile telephone is enabled to resend a further request for service.

## Claims

1. A method for transmitting a request to establish a radio bearer by a mobile communication device (105) connected to a mobile telecommunication network (103), the method comprising:
transmitting to the mobile telecommunication network (103) the request to establish the radio bearer for data transmission and reception between the mobile telecommunication network (103) and the mobile communication device (105),
determining if a first time value is stored on the mobile communication device (105), the first time value being set by the mobile telecommunication network (103) and received from the mobile telecommunication network (103);
initiating a timer using the first time value, if the first time value is stored on the mobile communication device (105); and,
transmitting to the mobile telecommunication network (103) a further request to establish the radio bearer, if the radio bearer has not been established and the timer initiated using the first time value is expired.

2. The method of claim 1 further comprising:
if a message is received from the mobile telecommunication network (103), after initiating the timer using the first time value, the message including a second time value set by the mobile telecommunication network (103),
determining if the second time value is different to the first time value, and,
if the second time value is different to the first time value,
initiating the timer using the second time value, and
transmitting the further request if the radio bearer has not been established and the timer initiated using the second time value is expired.

3. The method of claim 1 further comprising:
if the first time value is not stored on the mobile communication device (105) initiating the timer using a default time value, and
transmitting the further request to the mobile telecommunication network (103), if the radio bearer has not been established, and the timer initiated using the default time value is expired.

4. The method of claim 3, further comprising
if a message is received from the mobile telecommunication network, after initiating the timer using the default time value, the message including a second time value set by the mobile telecommunication network (103),
stopping the timer initiated using the default time value,
initiating the stopped timer using the second time value, and
transmitting the further request if the radio bearer has not been established and the timer initiated using the second time value is expired.

5. The method of claim 3, wherein the default time value is hard coded in the mobile communication device (105).

6. The method of claims 2 or 4, wherein the message represents that the request has been accepted by the mobile telecommunication network (103).

7. The method of claim 3 wherein the timer initiated using the first time value decreases the first time value until the first time value reaches a desired target value, and the timer initiated using the default time value decreases the default time value until the default time value reaches the desired target value.

8. The method of claim 3 wherein the timer initiated using the first time value increases the first time value until the first time value reaches a desired target value, and the timer initiated using the default time value increases the default time value until the default time value reaches the desired target value.

9. The method of claim 1 further comprising cancelling the timer, if the radio bearer has been established.

10. A method for receiving a request to establish a radio bearer by a mobile telecommunication network (103), the method comprising:
if the request to establish the radio bearer for data transmission and reception between the mobile telecommunication network (103) and the mobile communication device (105) is received from the mobile communication device (105),
setting a time value, which is used to initiate a timer for a further request transmission to establish the radio bearer of the mobile communication device (105),
transmitting a message to the mobile communication device (105), the message including the set time value.

11. The method of claim 10, wherein the message represents that the request has been accepted by the mobile telecommunication network (103).

12. The method of claim 10, wherein the time value is set based on the type of application running on the mobile communication device (105).

13. The method of claim 10, wherein the time value is set based on available resources.

14. The method of claim 10 wherein the time value is set based on Radio Resource Management procedures and algorithms used by the mobile telecommunication network (103).

15. A mobile communication device (105) adapted to perform the method described in at least one of claims 1 to 9.

16. A mobile telecommunication network (103) adapted to perform the method described in at least one of the claims 10 to 14.

## Patentansprüche

1. Verfahren zum Senden einer Anforderung zum Herstellen eines Funkträgers durch ein Mobilkommunikationsgerät (105), das mit einem Mobiltelekommunikationsnetz (103) verbunden ist, wobei das Verfahren Folgendes umfasst:
Senden - an das Mobiltelekommunikationsnetz (103) - der Anforderung zum Herstellen des Funkträgers zur Datenübertragung und Empfangen zwischen dem Mobiltelekommunikationsnetz (103) und dem Mobilkommunikationsgerät (105),
Bestimmen, ob ein erster Zeitwert in dem Mobilkommunikationsgerät (105) gespeichert ist, wobei der erste Zeitwert durch das Mobiltelekommunikationsnetz (103) eingestellt und aus dem Mobiltelekommunikationsnetz (103) empfangen wird;
Initiieren eines Zeitnehmers unter Verwendung des ersten Zeitwertes, wenn der erste Zeitwert in dem Mobilkommunikationsgerät (105) gespeichert ist; und
Senden - an das Mobiltelekommunikationsnetz (103) - einer weiteren Anforderung zum Herstellen des Funkträgers, wenn der Funkträger noch nicht hergestellt wurde und der Zeitnehmer, der unter Verwendung des ersten Zeitwertes initiiert wurde, abgelaufen ist.

2. Verfahren nach Anspruch 1, das des Weiteren Folgendes umfasst:
wenn eine Meldung aus dem Mobiltelekommunikationsnetz (103) empfangen wird, nachdem der Zeitnehmer unter Verwendung des ersten Zeitwertes initiiert wurde, und die Meldung einen zweiten Zeitwert enthält, der durch das Mobiltelekommunikationsnetz (103) eingestellt wurde,
Bestimmen, ob der zweite Zeitwert von dem ersten Zeitwert verschieden ist, und
wenn der zweite Zeitwert von dem ersten Zeitwert verschieden ist,
Initiieren des Zeitnehmers unter Verwendung des zweiten Zeitwertes, und
Senden der weiteren Anforderung, wenn der Funkträger noch nicht hergestellt wurde und der Zeitnehmer, der unter Verwendung des zweiten Zeitwertes initiiert wurde, abgelaufen ist.

3. Verfahren nach Anspruch 1, das des Weiteren Folgendes umfasst:
wenn der erste Zeitwert nicht in dem Mobilkommunikationsgerät (105) gespeicherte ist, Initiieren des Zeitnehmers unter Verwendung eines Standardvorgabe-Zeitwertes, und
Senden der weiteren Anforderung an das Mobiltelekommunikationsnetz (103), wenn der Funkträger noch nicht hergestellt wurde und der Zeitnehmer, der unter Verwendung des Standardvorgabe-Zeitwertes initiiert wurde, abgelaufen ist.

4. Verfahren nach Anspruch 3, des Weiteren das Folgendes umfasst:
wenn eine Meldung aus dem Mobiltelekommunikationsnetz empfangen wird, nachdem der Zeitnehmer unter Verwendung des Standardvorgabe-Zeitwert initiiert wurde, und die Meldung einen zweiten Zeitwert enthält, der durch das Mobiltelekommunikationsnetz (103) eingestellt wurde,
Anhalten des Zeitnehmers, der unter Verwendung des Standardvorgabe-Zeitwertes initiiert wurde,
Initiieren des angehaltenen Zeitnehmers unter Verwendung des zweiten Zeitwertes, und
Senden der weiteren Anforderung, wenn der Funkträger noch nicht hergestellt wurde und der Zeitnehmer, der unter Verwendung des zweiten Zeitwertes initiiert wurde, abgelaufen ist.

5. Verfahren nach Anspruch 3, wobei der Standardvorgabe-Zeitwert in dem Mobilkommunikationsgerät (105) fest codiert ist.

6. Verfahren nach den Ansprüchen 2 oder 4, wobei die Meldung darstellt, dass die Anforderung durch das Mobiltelekommunikationsnetz (103) akzeptiert wurde.

7. Verfahren nach Anspruch 3, wobei der Zeitnehmer, der unter Verwendung des ersten Zeitwertes initiiert wurde, den ersten Zeitwert verringert, bis der erste Zeitwert einen gewünschten Sollwert erreicht, und der Zeitnehmer, der unter Verwendung des Standardvorgabe-Zeitwertes initiiert wurde, den Standardvorgabe-Zeitwert verringert, bis der Standardvorgabe-Zeitwert den gewünschten Sollwert erreicht.

8. Verfahren nach Anspruch 3, wobei der Zeitnehmer, der unter Verwendung des ersten Zeitwertes initiiert wurde, den ersten Zeitwert erhöht, bis der erste Zeitwert einen gewünschten Sollwert erreicht, und der Zeitnehmer, der unter Verwendung des Standardvorgabe-Zeitwertes initiiert wurde, den Standardvorgabe-Zeitwert erhöht, bis der Standardvorgabe-Zeitwert den gewünschten Sollwert erreicht.

9. Verfahren nach Anspruch 1, das des Weiteren Folgendes umfasst:
Abbrechen des Zeitnehmers, wenn der Funkträger hergestellt wurde.

10. Verfahren zum Empfangen einer Anforderung zum Herstellen eines Funkträgers durch ein Mobiltelekommunikationsnetz (103), wobei das Verfahren Folgendes umfasst:
wenn die Anforderung zum Herstellen des Funkträgers zur Datenübertragung und Empfangen zwischen dem Mobiltelekommunikationsnetz (103) und dem Mobilkommunikationsgerät (105) aus dem Mobilkommunikationsgerät (105) empfangen wird,
Einstellen eines Zeitwertes, der zum Initiieren eines Zeitnehmers für eine weitere Sendeanforderung zum Herstellen des Funkträgers des Mobilkommunikationsgerätes (105) verwendet wird,
Senden einer Meldung an das Mobilkommunikationsgerät (105), wobei die Meldung den eingestellten Zeitwert enthält.

11. Verfahren nach Anspruch 10, wobei die Meldung darstellt, dass die Anforderung durch das Mobiltelekommunikationsnetz (103) akzeptiert wurde.

12. Verfahren nach Anspruch 10, wobei der Zeitwert auf der Basis der Art der Anwendung eingestellt wird, die auf dem Mobilkommunikationsgerät (105) arbeitet.

13. Verfahren nach Anspruch 10, wobei der Zeitwert auf der Basis verfügbarer Ressourcen eingestellt wird.

14. Verfahren nach Anspruch 10, wobei der Zeitwert auf der Basis von Funkressourcenmanagement-Verfahren und - algorithmen eingestellt wird, die durch das Mobiltelekommunikationsnetz (103) verwendet werden.

15. Mobilkommunikationsgerät (105), das dafür ausgelegt ist, das in mindestens einem der Ansprüche 1 bis 9 beschriebene Verfahren auszuführen.

16. Mobiltelekommunikationsnetz (103), das dafür ausgelegt ist, das in mindestens einem der Ansprüche 10 bis 14 beschriebene Verfahren auszuführen.

## Revendications

1. Procédé de transmission d'une demande d'établissement d'un support radio par un dispositif de communication mobile (105) relié à un réseau de télécommunication mobile (103), le procédé comprenant :
la transmission au réseau de télécommunication mobile (103) de la demande d'établissement du support radio pour la transmission et la réception de données entre le réseau de télécommunication mobile (103) et le dispositif de communication mobile (105),
la détermination si une première valeur de temps est stockée sur le dispositif de communication mobile (105), la première valeur de temps étant réglée par le réseau de télécommunication mobile (103) et reçue à partir du réseau de télécommunication mobile (103) ;
le déclenchement d'une minuterie en utilisant la première valeur de temps, si la première valeur de temps est stockée sur le dispositif de communication mobile (105) ; et
la transmission au réseau de télécommunication mobile (103) d'une autre demande d'établissement du support radio, si le support radio n'a pas été établi et la minuterie déclenchée en utilisant la première valeur de temps a expiré.

2. Procédé selon la revendication 1, comprenant en outre :
si un message est reçu à partir du réseau de télécommunication mobile (103), après le déclenchement de la minuterie en utilisant la première valeur de temps, le message comprenant une deuxième valeur de temps réglée par le réseau de télécommunication mobile (103),
la détermination si la deuxième valeur de temps est différente de la première valeur de temps, et
si la deuxième valeur de temps est différente de la première valeur de temps,
le déclenchement de la minuterie en utilisant la deuxième valeur de temps, et
la transmission de l'autre demande si le support radio n'a pas été établi et la minuterie déclenchée en utilisant la deuxième valeur de temps a expiré.

3. Procédé selon la revendication 1, comprenant en outre :
si la première valeur de temps n'est pas stockée sur le dispositif de communication mobile (105),
le déclenchement de la minuterie en utilisant une valeur de temps par défaut, et
la transmission de l'autre demande au réseau de télécommunication mobile (103), si le support radio n'a pas été établi, et la minuterie déclenchée en utilisant la valeur de temps par défaut a expiré.

4. Procédé selon la revendication 3, comprenant en outre :
si un message est reçu à partir du réseau de télécommunication mobile, après le déclenchement de la minuterie en utilisant la valeur de temps par défaut, le message comprenant une deuxième valeur de temps réglée par le réseau de télécommunication mobile (103),
l'arrêt de la minuterie déclenchée en utilisant la valeur de temps par défaut,
le déclenchement de la minuterie arrêtée en utilisant la deuxième valeur de temps, et
la transmission de l'autre demande si le support radio n'a pas été établi et la minuterie déclenchée en utilisant la deuxième valeur de temps a expiré.

5. Procédé selon la revendication 3, dans lequel la valeur de temps par défaut est codée par codage matériel dans le dispositif de communication mobile (105).

6. Procédé selon la revendication 2 ou 4, dans lequel le message représente que la demande a été acceptée par le réseau de télécommunication mobile (103).

7. Procédé selon la revendication 3, dans lequel la minuterie déclenchée en utilisant la première valeur de temps réduit la première valeur de temps jusqu'à ce que la première valeur de temps atteigne une valeur cible souhaité, et la minuterie déclenchée en utilisant la valeur de temps par défaut réduit la valeur de temps par défaut jusqu'à ce que la valeur de temps par défaut atteigne la valeur cible souhaitée.

8. Procédé selon la revendication 3, dans lequel la minuterie déclenchée en utilisant la première valeur de temps augmente la première valeur de temps jusqu'à ce que la première valeur de temps atteigne une valeur cible souhaitée, et la minuterie déclenchée en utilisant la valeur de temps par défaut augmente la valeur de temps par défaut jusqu'à ce que la valeur de temps par défaut atteigne la valeur cible souhaitée.

9. Procédé selon la revendication 1, comprenant en outre
l'annulation de la minuterie si le support radio a été établi.

10. Procédé de réception d'une demande d'établissement d'un support radio par un réseau de télécommunication mobile (103), le procédé comprenant :
si la demande d'établissement du support radio pour la transmission et la réception de données entre le réseau de télécommunication mobile (103) et le dispositif de communication mobile (105) est reçue à partir du dispositif de communication mobile (105),
le réglage d'une valeur de temps, qui est utilisée pour déclencher une minuterie pour la transmission d'une autre demande d'établissement du support radio du dispositif de communication mobile (105),
la transmission d'un message au dispositif de communication mobile (105), le message comprenant la valeur de temps réglée.

11. Procédé selon la revendication 10, dans lequel le message représente que la demande a été acceptée par le réseau de télécommunication mobile (103).

12. Procédé selon la revendication 10, dans lequel la valeur de temps est réglée sur la base du type d'application s'exécutant sur le dispositif de communication mobile (105).

13. Procédé selon la revendication 10, dans lequel la valeur de temps est réglée sur la base de ressources disponibles.

14. Procédé selon la revendication 10, dans lequel la valeur de temps est réglée sur la base de procédures et algorithmes de gestion de ressources radio utilisés par le réseau de télécommunication mobile (103).

15. Dispositif de communication mobile (105) apte à effectuer le procédé selon au moins l'une des revendications 1 à 9.

16. Réseau de télécommunication mobile (103) apte à effectuer le procédé selon au moins l'une des revendications 10 à 14.
